(19) **Europäisches Patentamt / European Patent Office / Office européen des brevets**

(11) **EP 1 890 437 A1**

(12) **DEMANDE DE BREVET EUROPEEN**

(43) Date de publication:
**20.02.2008 Bulletin 2008/08**

(51) Int Cl.:
**H04L 12/56** $^{(2006.01)}$

(21) Numéro de dépôt: **07016099.9**

(22) Date de dépôt: **16.08.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **16.08.2006 FR 0653378**

(71) Demandeur: **France Télécom**
**75015 Paris (FR)**

(72) Inventeurs:
• **Ansel, Pierre**
**92140 Clamart (FR)**

• **Sibert, Hervé**
**72000 Le Mans (FR)**
• **Asselineau, Roderick**
**91440 Bures Sur Yvette (FR)**
• **Marty, Pascal**
**92170 Vanves (FR)**

(74) Mandataire: **de la Fouchardière, Marie-Noelle et al**
**France Télécom,**
**R&D/PIV/PI,**
**38-40, rue du Général-Leclerc**
**92794 Issy Moulineaux Cedex 9 (FR)**

(54) **Procédé de limitation de débit dans un réseau de télecommunications**

(57) L'invention concerne un procédé de limitation de débit vers un service réseau, le service ayant un débit cible ($D^M$), un trafic de paquets de données à destination du service provenant d'au moins un contributeur, un débit étant associé à la portion du trafic provenant dudit contributeur, ledit procédé étant caractérisé en ce qu'il comprend une étape (5) de transmission vers le service du paquet issu du contributeur si le débit du trafic du contributeur est en-dessous d'un seuil ($L_n$), le seuil étant fonction du débit cible et d'un trafic de paquets de données courant à destination dudit service, le débit du trafic du contributeur étant mesuré sur le trafic de paquets de données courant.

Figure 1

**Description**

L'invention se situe dans le domaine des réseaux de télécommunications. Elle concerne plus précisément une technique de limitation de débit dans un réseau.

L'invention trouve une application particulièrement intéressante dans la protection de services du réseau soumis à des débits trop importants, causés par des pics de trafic ou des attaques par déni de service.

Dans un réseau de paquets, par exemple un réseau de type IP, il est connu d'offrir des services en spécifiant une certaine qualité de service. Par exemple, la qualité de service s'exprime par un débit maximal autorisé, ou bande passante.

Différents mécanismes sont utilisés pour contrôler un volume de trafic entrant, gérer et adapter la bande passante. Parmi ces techniques on connaît celle de la limitation de débit (le terme couramment utilisé est le terme anglais "rate-limiting") qui permet de contrôler le volume de trafic à destination d'un service ainsi que le débit avec lequel il est transmis afin que la limite de trafic à destination du service soit respectée. Les algorithmes existants de rate-limiting sont basés sur l'utilisation de files d'attente de paquets.

Un premier algorithme connu de rate-limiting, appelé "leaky bucket" permet de réguler un trafic arrivant sur une file d'attente pour sortir en flux fixes sur le réseau. L'algorithme contrôle des intervalles temporels de transmission des paquets de telle sorte que le débit effectif de paquets transmis sur le réseau à destination du service respecte la cible de débit spécifiée. Ainsi, si la taille des paquets est importante, les intervalles de temps entre les transmissions des paquets vers le service augmentent, de telle sorte qu'un débit moyen, compatible avec la cible de débit, soit respecté. Le débit moyen est calculé comme une moyenne pondérée des débits obtenus lors des transmissions des N derniers paquets et lors des attentes entre deux transmissions. Cet algorithme est bien adapté pour envoyer des débits fixes sur le réseau mais en contrepartie, il ne permet pas d'utiliser plus de ressources lorsque le réseau est peu chargé.

Un second algorithme connu de rate-limiting, appelé "token bucket" utilise des jetons qui correspondent à des autorisations de transmission sur le réseau d'un certain volume de données à destination d'un service. L'algorithme consiste à remplir régulièrement une file d'attente de jetons. Si le débit cible attendu est de 1 Mo/s et si un jeton correspond à un droit de transmission de 1 Ko sur le réseau, la file d'attente sera remplie de jetons à raison de 1000 jetons par seconde. En parallèle, cet algorithme utilise une seconde file d'attente de paquets à transmettre. Un paquet de taille S est transmis sur le réseau s'il y a suffisamment de jetons de taille J dans la file d'attente de jetons pour transmettre S octets sur le réseau. Il faut donc au minimum que N jetons soient présents dans la file d'attente de jetons avec N = S/J pour que le paquet puisse être transmis. Ce mécanisme permet à un trafic d'être transmis tant qu'il y a des jetons dans la file d'attente, ceux-ci ayant pu être accumulés en situation de réseau peu chargé. Il est donc adapté à la gestion de pics de trafic.

Ces algorithmes traitent un flux ou un type de flux à destination du service. Lorsque les files d'attente arrivent à saturation, les paquets sont jetés, quelle que soit leur provenance. Ainsi, ils n'offrent pas un niveau de traitement suffisamment fin pour discriminer différents types de contributeurs : des petits contributeurs qui emploieraient la bande passante dans une limite acceptable et des gros contributeurs qui dépasseraient la limite acceptable.

On connaît de la demande publiée sous le n° US 2006/0036720 une méthode de limitation de débit appliquée à des instances d'événements de certains types. Un exemple de type d'événement est un message du protocole "DNS" (de l'anglais "Domain Name Service"), un exemple d'instance de ce type d'événement est l'identifiant de la source qui a émis ce type de message. La limitation de débit consiste dans ce cas à faire une action, par exemple jeter le message, lorsque le nombre d'instances d'événements dépasse un seuil prédéfini. Ainsi, la méthode peut limiter le trafic provenant d'un contributeur. Cependant le seuil qui déclenche la limitation de débit est fixé a priori. Ainsi, la méthode ne permet pas d'adapter la limitation de débit en fonction de l'utilisation réelle de la bande passante. En effet avec la méthode décrite, si un contributeur envoie vers le service un trafic avec un débit supérieur au seuil fixé, son trafic sera jeté alors qu'il est possible que le débit de son trafic respecte le débit cible du service, notamment si aucun autre contributeur n'envoie de trafic vers le service au même moment.

Il existe donc un besoin d'un mécanisme permettant de limiter le trafic vers un service réseau en respectant le débit cible du service, le mécanisme permettant de privilégier de petits contributeurs au service par rapport à des gros contributeurs, en définissant et en appliquant un seuil entre petits contributeurs dont le trafic est effectivement autorisé et réémis vers le service, et gros contributeurs dont le trafic est rejeté, le seuil pouvant évoluer selon le trafic courant réel à destination du service.

L'invention répond à ce besoin en proposant un procédé de limitation de débit vers un service réseau, le service ayant un débit cible ($D^M$), un trafic de paquets de données à destination du service provenant d'au moins un contributeur, un débit étant associé à la portion du trafic provenant dudit contributeur, ledit procédé étant caractérisé en ce qu'il comprend une étape de transmission vers le service du paquet issu du contributeur si le débit du trafic du contributeur est en-dessous d'un seuil ($L_n$), le seuil étant fonction du débit cible et d'un trafic de paquets de données courant à destination dudit service, le débit du trafic du contributeur étant mesuré sur le trafic de paquets de données courant.

Avantageusement, ce procédé de rate-limiting permet de prioriser de petits contributeurs, dont le débit courant du trafic est en-dessous du seuil, par rapport à de gros contributeurs, dont le débit courant du trafic est au-dessus du seuil, tout en respectant une limite cible de débit sur un service du réseau. Ainsi, le contributeur classé comme petit voit son accès au service maintenu, même lorsque des contributeurs classés comme gros tentent d'accéder au service. Les paquets émanant de contributeurs classés comme gros sont rejetés. Ainsi, un niveau de qualité de service est maintenu dans le temps pour les petits contributeurs. En outre, le seuil est calculé à partir du trafic courant total à destination du service. Ainsi, il est fonction de l'utilisation effective du service au moment de sa comparaison avec un débit de contributeur. Le procédé est tel que la somme totale des débits des petits contributeurs autorisés est proche du débit cible acceptable par le service, afin de laisser passer le trafic du plus grand nombre possible de petits contributeurs tout en ne dépassant pas la limite acceptable pour le service. Ainsi, le procédé optimise l'utilisation de la bande passante du service.

Un autre avantage de ce procédé est qu'il contribue à la lutte contre les attaques par déni de service qui ont pour origine un seul contributeur ou différents contributeurs usurpant une même adresse source. Une telle attaque se traduit donc par la présence d'un gros contributeur sur le service.

Selon une caractéristique de l'invention, le seuil ($L_n$) étant calculé à un premier instant, il est évalué, à chaque réception de paquet, un second instant où le seuil sera recalculé.

Avantageusement, il est tenu compte de chacun des paquets, et donc de l'évolution en temps-réel du trafic à destination du service pour évaluer la date à laquelle le seuil doit être recalculé. Ainsi, toute évolution dans le débit du trafic courant est prise en compte immédiatement. Ainsi, au cours d'évaluations successives de la date de recalcul du seuil, il se peut que le seuil soit recalculé souvent, par exemple lorsque de nombreux nouveaux contributeurs envoient du trafic vers le service, ou au contraire qu'aucun recalcul du seuil ne soit nécessaire pendant une longue période, par exemple dans le cas où le nombre de contributeurs et le volume de trafic qu'ils envoient vers le service évoluent peu, le volume restant dans la limite du débit cible du service. Ainsi, il est possible de s'adapter rapidement à une évolution de trafic en faisant évoluer le seuil, et de maintenir un fonctionnement normal sans calcul inutile du seuil.

Selon des caractéristiques particulières de l'invention, une période de temps variable ($T_R$) de calcul du seuil étant définie par le premier et le second instants de calcul du seuil, ladite période de temps variable est comprise entre une valeur minimale ($T^0$) de détermination du trafic de paquets de données courant, et une valeur maximale prédéterminée ($T_R^{\max}$).

Choisir une période de temps de calcul du seuil supérieure à une valeur minimale qui correspond à la durée d'une fenêtre temporelle utilisée pour évaluer le trafic courant à destination du service et le débit du trafic d'un utilisateur est judicieux. En effet, lorsqu'un nouveau seuil entre petits et gros contributeurs est fixé, tous les contributeurs rencontrés dans la fenêtre temporelle doivent être reclassés en gros ou petit contributeur. Une solution peu satisfaisante consisterait à parcourir les contributeurs de la fenêtre et à les reclasser, ce qui entraînerait une surcharge de calculs à chaque redéfinition de seuil. La solution utilisée dans l'invention consiste à reclasser les contributeurs de la fenêtre à leur sortie ou à leur entrée, lors du glissement de la fenêtre opéré à chaque arrivée d'un nouveau paquet. Ainsi, lorsque le seuil entre petits et gros contributeurs est redéfini, il est nécessaire d'attendre au moins une durée correspondant à la durée choisie de la fenêtre temporelle avant de recalculer un nouveau seuil.

Ainsi, au moment d'un recalcul de seuil, les valeurs correspondant à la somme des débits des petits contributeurs et la somme des débits des gros contributeurs sont cohérentes entre elles puisque c'est le seuil qui détermine si un contributeur est petit ou gros. La période de temps variable pour le calcul du seuil peut varier jusqu'à une valeur maximale. Lorsque l'on est proche de cette valeur maximale, le seuil est recalculé moins fréquemment.

Ainsi, lorsque la somme des débits des petits contributeurs est éloignée du débit cible du service, typiquement supérieure au débit cible + une marge acceptable τ entre le débit de données réellement transmises au service et le débit cible, ou inférieure au débit cible - la marge acceptable τ, une réévaluation de la période de temps variable s'impose car la bande passante n'est pas utilisée de façon optimale : soit il n'y a pas assez de contributeurs autorisés, donc considérés comme petits, et la bande passante est sous-utilisée, soit il y a trop de contributeurs autorisés, et la bande passante est utilisée au maximum. Dans ces deux cas, un réajustement du seuil s'impose : soit pour augmenter le seuil afin que des contributeurs jugés gros jusqu'à présent passent dans la catégorie des petits contributeurs et soient autorisés à envoyer du trafic vers le service, soit pour diminuer le seuil afin de respecter le débit cible du service.

Dans un mode particulier de réalisation de l'invention, lorsque l'un des deux derniers seuils successifs est au-dessus du seuil, et l'autre au-dessous, le seuil est en outre borné par les deux derniers seuils successifs.

Avantageusement, le procédé tient compte du fait que des contributeurs ont des débits proches, voire similaires. Dans ce cas de figure, il apparaît des oscillations des seuils successifs : un deuxième seuil peut être inférieur à un premier seuil calculé précédemment, et un troisième seuil, calculé après le deuxième seuil peut être supérieur au deuxième seuil, et ainsi de suite. Ainsi, un contributeur, jugé petit par rapport au premier seuil, et donc autorisé à émettre du trafic vers le service, peut être jugé gros par rapport au deuxième seuil et donc, pendant la période d'application du deuxième seuil, son trafic sera bloqué. La qualité de service n'est alors pas maintenue pour cet utilisateur.

Tenir compte de ce cas de figure permet d'affiner le calcul du seuil et d'éviter le passage systématique d'un contributeur d'une catégorie où son trafic est accepté à une autre où son trafic est bloqué dans le cas d'oscillation du seuil. Ainsi, les contributeurs dont le débit est compris dans un intervalle compris entre le deuxième et le premier seuils, qui marquent le début d'une oscillation, sont donc acceptés dans la mesure du possible et dans l'ordre d'arrivée de ces contributeurs. La décision d'accepter un contributeur est conservée tant que le seuil oscille autour du débit de ce contributeur, ou si le seuil augmente du fait d'une diminution des débits des petits contributeurs. Les contributeurs dont la limite est inférieure au deuxième seuil, borne inférieure de l'intervalle sont automatiquement acceptés. Ainsi le débit autorisé en sortie d'un module de limitation de débit qui met en oeuvre le procédé selon l'invention est contrôlé de manière très fine.

Avantageusement, le procédé apporte également une solution aux dénis de service involontaires provoqués par un accès à un service par de nombreux contributeurs au même moment, par exemple, un accès simultané à un site internet, qui sature les ressources d'un serveur.

L'invention concerne aussi un dispositif de limitation de débit vers un service réseau, le service ayant un débit cible $(D^M)$, un trafic de paquets de données à destination du service provenant d'au moins un contributeur, un débit étant associé à la portion du trafic provenant dudit contributeur, ledit dispositif étant caractérisé en ce qu'il comprend des moyens de transmission vers le service du paquet issu du contributeur si le débit du trafic du contributeur est en-dessous d'un seuil, le seuil étant fonction du débit cible et d'un trafic de paquets de données courant à destination dudit service, le débit du trafic du contributeur étant mesuré sur le trafic de paquets de données courant.

Dans une réalisation particulière de l'invention le dispositif de limitation de débit comprend en outre :

- des moyens de calcul du débit associé à la portion du trafic provenant dudit contributeur, et
- des moyens de calcul du seuil.

Dans une réalisation particulière de l'invention le dispositif de limitation de débit comprend en outre des moyens d'évaluation d'un instant de recalcul du seuil, le seuil ayant été calculé à un premier instant, les moyens d'évaluation sont destinés à fournir un second instant où le seuil sera recalculé.

Dans une réalisation particulière de l'invention le dispositif de limitation de débit comprend en outre des moyens de limitation du seuil, destinés à borner le seuil par deux derniers seuils successifs, l'un des deux derniers seuils successifs étant au-dessus du seuil, et l'autre au-dessous.

L'invention concerne aussi un équipement réseau, caractérisé en ce qu'il comprend un dispositif de limitation de débit vers un service réseau, le service ayant un débit cible $(D^M)$, un trafic de paquets de données à destination du service provenant d'au moins un contributeur, un débit étant associé à la portion du trafic provenant dudit contributeur. Ledit dispositif comprend des moyens de transmission vers le service du paquet issu du contributeur si le débit du trafic du contributeur est en-dessous d'un seuil, le seuil étant fonction du débit cible et d'un trafic de paquets de données courant à destination dudit service, le débit du trafic du contributeur étant mesuré sur le trafic de paquets de données courant.

De façon avantageuse, un équipement du réseau, par exemple un routeur, dédié habituellement à des fonctions de routage, intègre le procédé selon l'invention et réalise, outre sa fonction habituelle, une fonction de limitation de débit selon l'invention. Ainsi, un trafic reçu par l'équipement réseau est traité selon l'invention, sans avoir à être redirigé vers d'autres équipements dédiés à la limitation du trafic. Ainsi, une architecture existante, pour appliquer la limitation de débit a besoin d'une mise à jour de certains équipements ; l'architecture n'a pas à être redéfinie afin de prendre en compte de nouveaux équipements en charge de réaliser la limitation de débit.

L'invention concerne aussi un programme d'ordinateur sur un support de données et chargeable dans la mémoire interne d'un ordinateur, le programme comprenant des portions de code pour l'exécution des étapes du procédé selon l'invention, lorsque le programme est exécuté sur ledit ordinateur.

Le procédé selon l'invention est réalisé sous la forme d'algorithmes mis en oeuvre par un programme comprenant des portions de code exécutables. Avantageusement les algorithmes ont tous une complexité en temps telle que le temps de traitement par paquet est constant (la notation couramment utilisée pour désigner une telle complexité est "O(1)"). Ainsi, les algorithmes et le procédé respectent des contraintes temps-réel ; ils sont applicables quelque soit la volumétrie de trafic et sont avantageusement utilisés pour un trafic très haut débit.

L'invention concerne également un moyen de stockage de données partiellement ou totalement amovible, comportant des instructions de code de programme informatique pour l'exécution des étapes du procédé selon l'invention.

De nombreux détails et avantages de l'invention seront mieux compris à la lecture de la description d'un mode particulier de réalisation en référence aux schémas annexés donnés à titre non limitatif et dans lesquels :

La figure 1 présente les étapes du procédé selon l'invention.
Les figures 2a et 3b illustrent l'utilisation, dans le procédé selon l'invention, d'une fenêtre de temps glissante pour un trafic de paquets à destination d'un service.

La figure 3a illustre l'étape de recherche de données propres à un contributeur, et la figure 3b présente les étapes de calcul d'un débit associé au trafic courant d'un contributeur.

La figure 4 présente les étapes de calcul du seuil utilisé par le procédé selon l'invention.

La figure 5 illustre un exemple de fonction de détermination de la période de calcul du seuil selon l'invention.

La figure 6 présente une architecture de réseau qui met en oeuvre le procédé selon l'invention.

La figure 7 est une représentation fonctionnelle d'un module de limitation de débit selon l'invention.

Le terme service réseau englobe tout élément d'un réseau soumis à une capacité exprimée en termes de bande passante. Ainsi, on entend par service réseau aussi bien un service de type logiciel, comme par exemple un site web, qu'un lien entre deux équipements dans le réseau, ou qu'un équipement réseau lui-même.

Un contributeur à un service réseau émet sur le réseau du trafic à destination de ce service. Il est identifié par une adresse IP (de l'anglais "Internet Protocol"). Dans le cadre de la limitation de débit et par la suite, un contributeur est qualifié de petit lorsque son trafic à destination du service est autorisé. Un contributeur est qualifié de gros lorsque son trafic est bloqué.

Un trafic courant, ou instantané, à destination du service symbolise le trafic global, i.e., l'ensemble des trafics à destination du service provenant des contributeurs, mesuré à un instant donné, ou pendant une période de temps donnée.

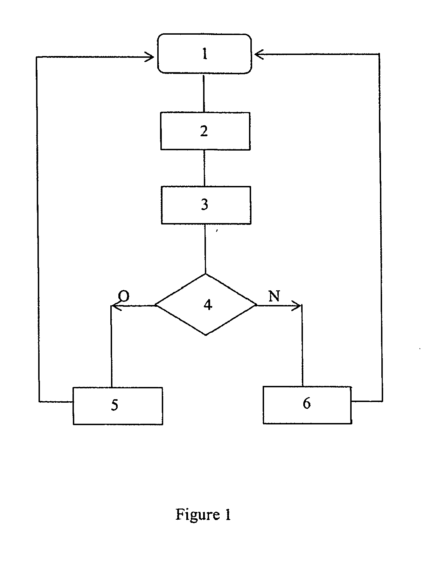

La figure 1 illustre les étapes du procédé de limitation de débit selon l'invention.

Dans une étape initiale 1 de réception de paquets, il est reçu un paquet d'un trafic de paquets de données à destination d'un service réseau.

Dans une étape 2, consécutive à la réception du paquet à l'étape initiale 1, le trafic courant à destination du service réseau est mis à jour afin de prendre en compte le paquet entrant.

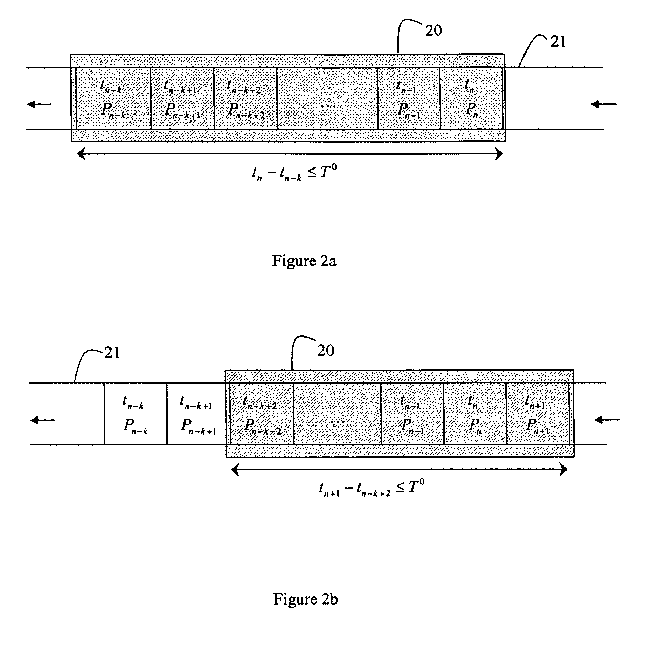

Dans une réalisation particulière de l'invention, le trafic courant est déterminé par le trafic des contributeurs sur une période de temps donnée, par exemple une fenêtre temporelle de durée fixe, appelée fenêtre glissante. La mise à jour du trafic courant consiste à prendre en compte dans la fenêtre glissante le paquet entrant et à faire sortir des paquets de la fenêtre glissante par glissement de celle-ci. Le fonctionnement de la fenêtre glissante et son glissement lors de l'arrivée d'un paquet sont décrits avec les figures 2a et 2b.

Dans une étape 3, consécutive à la mise à jour du trafic courant effectuée à l'étape 2, il est procédé au calcul du débit du trafic présent dans la fenêtre glissante et associé au contributeur qui a émis le paquet. Ainsi, le débit d'un contributeur est associé à la portion du trafic courant présent dans la fenêtre glissante qui provient dudit contributeur ; il est donc mesuré sur le trafic de paquets de données courant.

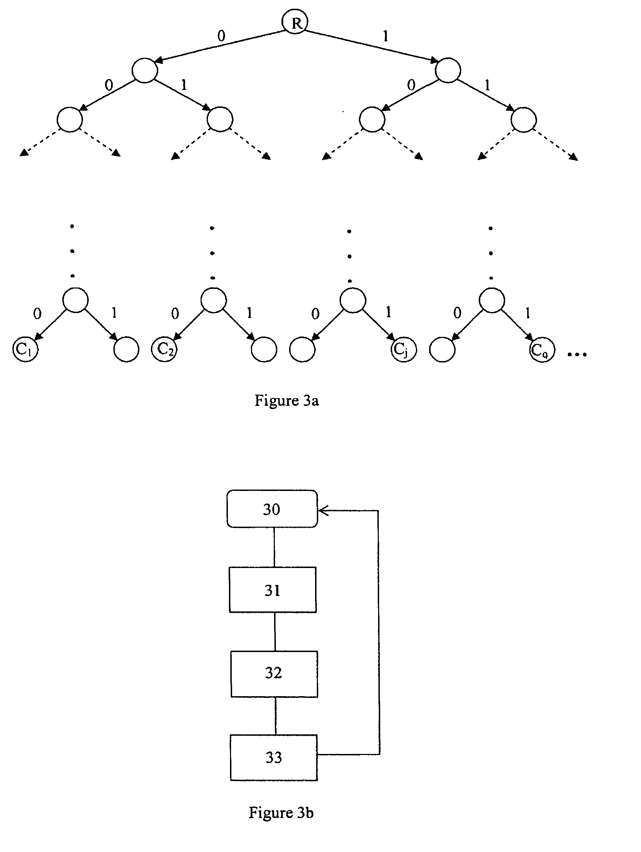

Un mode particulier de calcul du débit d'un contributeur est illustré par les figures 3a et 3b.

En fin d'étape 3, on dispose du débit associé au contributeur qui a émis le paquet dernièrement arrivé dans la fenêtre glissante.

Dans ce mode de réalisation de l'invention, le calcul du débit se fait à l'arrivée du nouveau paquet.

Dans une étape 4, consécutive à l'étape 3 de calcul du débit associé au contributeur qui a émis le paquet et dont le trafic constitue une portion du trafic courant, il est testé si le débit associé au contributeur est inférieur à un seuil $L_n$.

Si le résultat du test effectué à l'étape 4 est positif, alors le paquet est autorisé à destination du service. Dans une étape 5, le paquet est transmis au service. Plus précisément, la décision de transmettre le paquet au service est associée audit paquet. Ainsi, lorsque ce paquet sortira de la fenêtre glissante, il sera transmis au service. En fin d'étape 5, on se place dans l'étape initiale 1 de réception de paquets.

Si le résultat du test effectué à l'étape 4 est négatif, alors le paquet n'est pas autorisé à destination du service. Dans une étape 6, le paquet est bloqué. Plus précisément, la décision de bloquer le paquet est associée audit paquet. Ainsi, lorsque ce paquet sortira de la fenêtre glissante, il sera bloqué. En fin d'étape 6, on se place dans l'étape initiale 1 de réception de paquets.

Il est à noter que la décision d'autoriser un paquet à destination du service ou de le rejeter est prise au moment où le paquet est reçu.

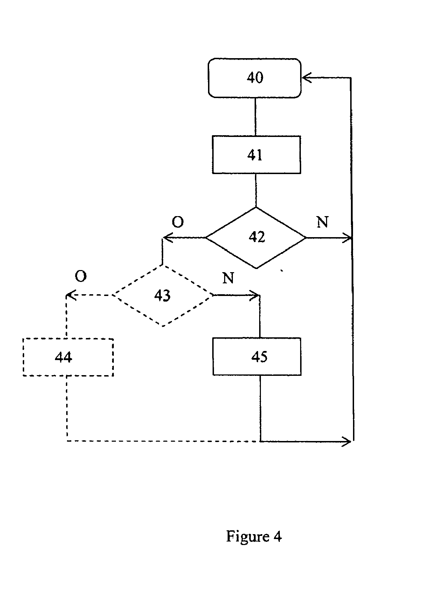

Le seuil $L_n$ est une limite qui discrimine les petits contributeurs des gros contributeurs. En-dessous du seuil $L_n$, un contributeur est réputé être un petit contributeur. Son trafic est autorisé à destination du service. Au-dessus de ce seuil, il est réputé être un gros contributeur, son trafic est bloqué. La limite $L_n$ est une limite variable, réactualisée en fonction du trafic global observé. Son mode de calcul est décrit avec la figure 4.

Dans une réalisation particulière de l'invention, le trafic courant est schématisé par le trafic à destination du service réseau observé pendant une période de temps donnée, appelée fenêtre glissante. Les figures 2a et 2b illustrent l'utilisation d'une fenêtre glissante dans le procédé selon l'invention, et son glissement lors de l'arrivée d'un nouveau paquet.

Une fenêtre glissante 20 est schématisée par le rectangle grisé. Dans cette réalisation particulière de l'invention, la fenêtre glissante 20 est constante et représente une plage temporelle $T^0$. Un trafic 21 à destination du service est constitué de paquets de données $P_n$, $n > 0$. Le sens de circulation du trafic 21 est schématisé par les demi-flèches : un paquet entre par la tête de la fenêtre glissante, comme indiqué par la demi-flèche de droite, et sort par la queue de la fenêtre, comme indiqué par la demi-flèche de gauche. A chaque paquet $P_n$ du trafic à destination du service est associé une date d'arrivée $t_n$. A chaque paquet $P_n$ sont associés également des caractéristiques non représentées, comme par exemple une adresse IP de la source qui a émis le paquet $P_n$. L'adresse IP de la source est une donnée qui figure dans l'entête du paquet $P_n$. La durée de la fenêtre glissante 20 étant constante, appartiennent à la fenêtre glissante 20 les paquets dont la valeur absolue de la différence entre leur date d'arrivée et la date d'arrivée du paquet le plus récent est inférieure à $T^0$. Dans la figure 2a, la fenêtre glissante comprend les paquets $P_{n-k}$ à $P_n$.

La figure 2b illustre le glissement de la fenêtre glissante 20 lors de l'arrivée d'un nouveau paquet $P_{n+1}$. Lorsque le nouveau paquet $P_{n+1}$ arrive, la tête de la fenêtre est décalée de telle sorte que le nouveau paquet $P_{n+1}$ y entre, et la queue de la fenêtre 20 est avancée tant que la différence entre la date d'arrivée $t_{n+1}$ du nouveau paquet $P_{n+1}$ et la date d'arrivée du plus ancien paquet de la fenêtre glissante 20 est supérieure à $T^0$. Ainsi, à l'arrivée du paquet $P_{n+1}$, les paquets $P_{n-k}$ et $P_{n-k+1}$ sortent de la fenêtre glissante 20.

Dans un mode de réalisation particulier de l'invention, illustré par les figures 3a et 3b, il est décrit les étapes de calcul d'un débit associé à un contributeur $C_j$, le débit étant calculé sur la fenêtre glissante qui est la période de détermination du trafic courant. Un arbre binaire de racine R, comme illustré figure 3a, est utilisé pour stocker des informations relatives à des contributeurs $C_1$, $C_2$, $C_j$ et $C_q$ qui contribuent au trafic global à destination du service. Les informations sont stockées dans une mémoire non représentée.

Le parcours de l'arbre binaire dépend de l'adresse IP source du contributeur. Cette adresse figure dans l'entête des paquets à destination du service. De manière classique, une adresse IP d'un contributeur est de la forme x.y.z.w, où x, y, z, et w sont des entiers non signés représentés sur 1 octet, donc compris entre 0 et 255. La taille d'une adresse IP est donc fixe, et de 32 bits. Si le bit de poids fort, i.e., le bit de gauche de l'adresse IP est 0, alors le parcours de l'arbre de racine R, commence par le noeud fils gauche. Sinon, il commence par le noeud fils droit. Ainsi, à partir d'un noeud de profondeur k (non représentée) dans l'arbre binaire, le parcours continue par le noeud fils gauche si le k-ième bit vaut 0 sinon, par le noeud fils droit.

Une feuille de l'arbre atteinte par ce parcours est associée au contributeur recherché. La feuille comprend des données (non représentées) sur le contributeur. Ainsi, la taille des adresses IP étant fixe, le temps de parcours de l'arbre est constant.

La figure 3b illustre les étapes du calcul d'un débit associé à un contributeur. Afin d'évaluer le débit associé à un contributeur $C_j$ pour le trafic courant, il est maintenu à jour, à l'arrivée d'un paquet émis par le contributeur $C_j$, un volume $V_j$ des paquets du contributeur $C_j$ contenus dans la fenêtre glissante. L'arbre binaire est avantageusement utilisé pour stocker et récupérer des données relatives aux contributeurs.

Dans une étape initiale 30, le paquet émis par le contributeur $C_j$ arrive dans la fenêtre glissante. Une date $t$ d'arrivée est associée au paquet.

Dans une étape 31, consécutive à l'étape initiale 30 de réception du paquet, il est récupéré des paramètres associés au contributeur $C_j$, comme le volume $V_j$ des paquets provenant du contributeur $C_j$ et présents dans la fenêtre glissante avant l'arrivée du paquet. La taille du paquet est ajoutée au volume $V_j$ des paquets provenant du contributeur $C_j$.

Dans une étape 32 consécutive à l'étape 31, et tant que la date $t$ du paquet et la date $t_q$ d'un ancien paquet q situé en queue de la fenêtre glissante est supérieure à $T^0$ :

- le contributeur $C_q$ qui a émis l'ancien paquet q situé en queue de la fenêtre glissante est identifié,
- la taille de l'ancien paquet q situé en queue de la fenêtre glissante est soustraite au volume $V_q$ des paquets provenant du contributeur $C_q$ et présents dans la fenêtre glissante.
- si $V_q$ est nul, le contributeur $C_q$ est retiré de l'arbre binaire des contributeurs,
- il est procédé au glissement de la fenêtre glissante conformément à la description associée à la figure 2a.

Dans une étape 33, consécutive à l'étape 32, il est calculé le débit $D_j$ associé au contributeur $C_j$ qui a émis le paquet. Le débit est calculé sur la fenêtre glissante à partir de la formule :

$$D_j = \frac{V_j}{T^0}$$

Ainsi, avant de prendre une décision de passage ou de rejet du paquet, on dispose du débit $D_j$ associé au contributeur $C_j$ qui a émis le paquet.

En fin d'étape 33, on se place dans l'étape initiale 30, en attente d'un paquet.

L'arbre binaire permet de retrouver lesdites informations en un temps constant. Il facilite ainsi le calcul du débit pour un paquet entrant.

La figure 4 présente les étapes de calcul du seuil du procédé selon l'invention.

Dans une étape initiale 40 d'évaluation du seuil, il est reçu le paquet. Dans l'étape 40, on suppose qu'un seuil $L_n$ et une taille de fenêtre temporelle $T^0$ sont en vigueur. On suppose que le seuil $L_n$ a été calculé à un instant $T_n$, antérieur à la date $t$ de réception du paquet. On suppose également que des seuils successifs antérieurs $L_{n-1}$, $L_{n-2}$, ont été calculés à des instants $T_{n-1}$ et $T_{n-2}$, antérieurs à l'instant $T_n$, et que le seuil $L_n$ a été calculé successivement au seuil $L_{n-1}$.

A la réception du paquet, et lors de la prise en compte du paquet dans la fenêtre glissante, il est procédé à la mise à jour des données associées aux contributeurs, conformément à l'étape 33 selon la figure 3b, et au glissement de la fenêtre. Ainsi, le débit associé au contributeur qui a émis le paquet est recalculé compte tenu des paquets sortants de la fenêtre glissante.

Il est vérifié si le contributeur qui a émis le paquet reste identifié comme petit contributeur (respectivement gros contributeur). Pour cela le débit du contributeur est comparé au seuil $L_n$. Si le débit du contributeur est en-dessous (respectivement au-dessus) du seuil $L_n$, le contributeur reste identifié comme petit (respectivement gros).

Si le contributeur reste identifié comme petit (respectivement gros), une somme $D^0$ (respectivement $D^1$) des débits des petits contributeurs (respectivement gros contributeurs), est mise à jour : le débit du petit contributeur (respectivement gros contributeur) est ajouté à la somme $D^0$ (respectivement $D^1$) des débits des petits contributeurs (respectivement gros contributeurs). En revanche, si le contributeur devient gros contributeur (respectivement petit contributeur), le débit du contributeur est soustrait à la somme $D^0$ des petits contributeurs et rajouté à la somme $D^1$ des gros contributeurs (respectivement soustrait à la somme $D^1$ des gros contributeurs et rajouté à la somme $D^0$ des petits contributeurs).

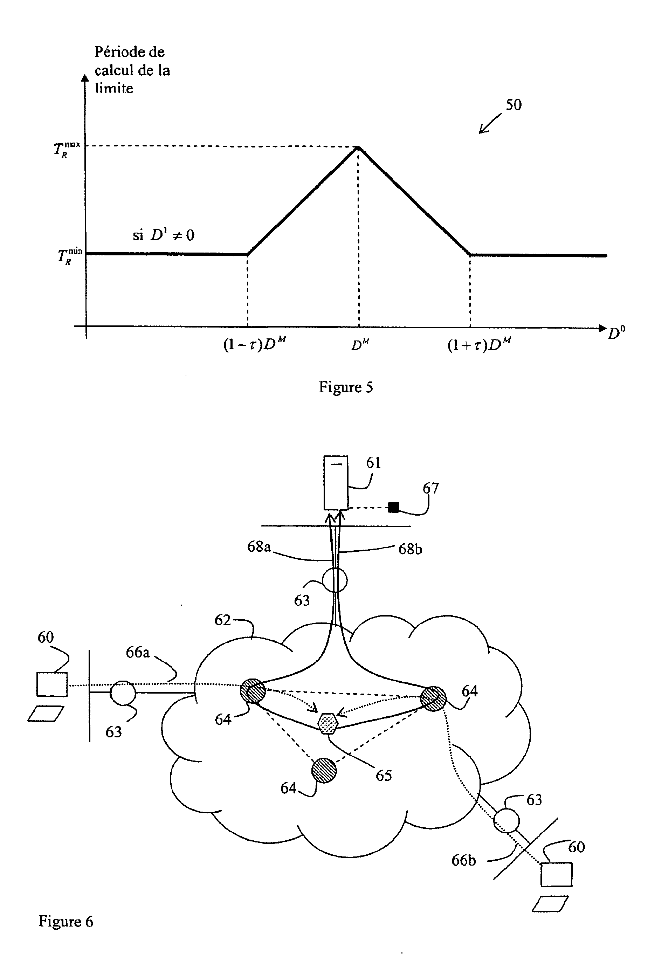

Dans une étape 41, consécutive à l'étape initiale 40, il est évalué une période de temps $T_R$ à la fin de laquelle un nouveau seuil $L_{n+1}$ devra être calculé. La période $T_R$ démarre à l'instant $T_n$ où le seuil $L_n$ a été calculé. Ainsi le seuil $L_n$ calculé à l'instant $T_n$, est appliqué à des paquets qui arrivent à des dates postérieures à l'instant $T_n$ ; il est en vigueur jusqu'à ce que le nouveau seuil $L_{n+1}$ soit calculé. Un exemple de détermination de la période de temps $T_R$ est présenté avec la figure 5.

Dans une étape de test 42, il est vérifié si un nouveau seuil doit être calculé, c'est-à-dire si la période de temps $T_R$ depuis le calcul du seuil $L_n$ a expiré ou non, c'est-à-dire si $t - T_n \geq T_R$.

Si le résultat du test effectué à l'étape 42 est négatif, alors, le seuil n'ayant pas besoin d'être recalculé, on se place dans l'étape initiale 40 d'évaluation du seuil, en attente d'un paquet.

Si le résultat du test effectué à l'étape 42 est positif, alors, dans une étape optionnelle de détection d'oscillations 43, il est vérifié si une oscillation du seuil est observée.

Pour cela, disposant des deux seuils successifs antérieurs au dernier seuil calculé $L_n$, il est vérifié si la somme des débits des petits contributeurs a dépassé le débit cible $D^M$ du service, lorsque les seuils antérieurs étaient en vigueur.

Dans une réalisation particulière de l'invention, des indicateurs $I_{n-2}^D$ et $I_{n-1}^D$, évalués aux instants $T_{n-1}$ et $T_n$, témoignent ou non du fait que les limites $L_{n-2}$ et $L_{n-1}$ ont engendré un dépassement du débit $D^M$ en sortie vers le service.

Ainsi, si la limite $L_{n-2}$, calculée à l'instant $T_{n-2}$ a conduit à un dépassement du débit cible $D^M$ par la somme $D^0$ des débits des petits contributeurs, alors $I_{n-1}^D$ sera positionné à 1. En revanche, si la limite $L_{n-1}$, calculée à l'instant $T_{n-1}$ n'a pas conduit à un dépassement du débit cible $D^M$ par la somme $D^0$ des débits des petits contributeurs, alors $I_{n-1}^D$ sera positionné à 0.

Si $I_{n-1}^D$ et $I_{n-2}^D$ sont différents, alors une oscillation du seuil est en train de se produire.

Notons $L_{min}$ et $L_{max}$ respectivement les minimum et maximum des deux derniers seuils :

$$L_{min} = \min(L_{n-2}, L_{n-1}),$$

$$L_{max} = \max(L_{n-2}, L_{n-1}).$$

Si le résultat du test effectué à l'étape optionnelle 43 de détection d'oscillations est positif alors, il est procédé au calcul du nouveau seuil $L_{n+1}$ à l'instant $T_{n+1}$, en ajoutant une contrainte sur le nouveau seuil. Celui-ci sera borné par l'intervalle $[L_{min}, L_{max}]$.

Ainsi, $L_{n+1}$ est calculé selon la formule suivante :

$$L_{n+1} = L_{\max} \quad \text{si} \quad \sqrt{\frac{D^M}{D^0}} L_n \geq L_{\max}$$

$$L_{n+1} = L_{\min} \quad \text{si} \quad \sqrt{\frac{D^M}{D^0}} L_n \leq L_{\min}$$

$$L_{n+1} = \sqrt{\frac{D^M}{D^0}} L_n$$

sinon.

Si le résultat du test effectué à l'étape optionnelle 43 de détection d'oscillations est négatif, ou si, l'étape optionnelle n'étant pas réalisée, le résultat du test effectué à l'étape 42 est positif, alors, dans une étape 46, il est procédé au calcul du nouveau seuil $L_{n+1}$ à l'instant $T_{n+1}$, comme suit :

$$L_{n+1} = \begin{cases} \sqrt{\dfrac{D^M}{D^0}} L_n \\ L_{n-1} \text{ si } D^0 = 0 \end{cases}$$

Si l'on suppose que la distribution du nombre de contributeurs est uniforme et de valeur ρ, $L_n$ et $D^0$ vérifient :

$$D^0 = \int_0^{L_n} \rho r\, dr = \rho \frac{L_n^{\,2}}{2} \quad (1)$$

où *r* représente un débit.
De la même façon, on peut obtenir une estimation de $L_{n+1}$ par

$$D^M = \int_0^{L_{n+1}} \rho r\, dr = \rho \frac{L_{n+1}^{\,2}}{2} \quad (2).$$

Les équations (1) et (2) conduisent donc à une estimation de $L_{n+1}$, vérifiant :

$$L_{n+1} = \sqrt{\frac{D^M}{D^0}} L_n .$$

Cependant, il est possible que le seuil $L_n$ soit tel que la somme $D^0$ des débits des petits contributeurs soit nulle. Un choix pertinent consiste, dans ces conditions, à prendre comme nouveau seuil $L_{n-1}$.
La figure 5 présente un exemple de fonction de détermination de la période $T_R$ de calcul du seuil.
La fonction est représentée par une courbe 50. L'abscisse représente la somme $D^0$ des débits des petits contributeurs. L'ordonnée représente la période $T_R$ de calcul du seuil. La période $T_R$ est bornée par les valeurs

$T_R^{\min}$ et $T_R^{\max}$ .

Dans une réalisation avantageuse de l'invention la valeur minimale $T_R^{\min}$ est égale à la fenêtre temporelle $T^0$. Ainsi, le calcul d'un nouveau seuil est effectué après que les paquets contenus dans la fenêtre au moment du calcul du seuil précédent sont sortis de la fenêtre. Ainsi les sommes des petits et des gros contributeurs sont cohérentes entre elle et utilisables pour un nouveau calcul de seuil.
Si la somme $D^0$ des débits des petits contributeurs est proche du débit cible du service $D^M$, alors la période de calcul du nouveau seuil $L_{n+1}$ sera proche d'une valeur maximale prédéterminée $T_R^{\max}$ . En effet, dans ce cas l'erreur commise dans le choix du seuil qui sépare les gros des petits contributeurs est faible. Ici, le seuil est optimal puisque tous les contributeurs jugés comme petits ont accès au service et la bande passante du service est utilisée au mieux.
Si la somme des débits des petits contributeurs est éloignée du débit cible du service $D^M$, alors la période de calcul du nouveau seuil $L_{n+1}$ sera courte, proche d'une valeur minimale prédéfinie $T_R^{\min}$ . En effet, dans ce cas, l'erreur commise dans le choix du seuil est importante puisque la bande passante du service n'est pas utilisée de manière optimale. Il est probable que des contributeurs jugés comme gros et dont le débit est légèrement supérieur au seuil $L_n$ pourraient accéder au service sans que le débit global ne dépasse le débit cible. Dans un exemple de réalisation de l'invention, $T_R^{\min}$ est égale à $T^0$ et a été fixée à 1 seconde, et $T_R^{\max}$ a été fixée à 5 secondes.
Typiquement la somme des débits des petits contributeurs est comparée à un intervalle [$(1 - \tau) D^M$, $(1 + \tau) D^M$], où $\tau$ représente une marge acceptable entre le débit de données réellement transmises au service et le débit cible $D^M$. Ainsi, si la somme des débits des petits contributeurs est éloignée du débit cible $D^M$, la période $T_R$ de calcul du seuil est proche des bornes de l'intervalle.
Ainsi, le seuil est recalculé d'autant plus souvent que l'erreur entre la somme des débits des petits contributeurs autorisés est la cible de débit $D^M$ pour le service est grande.
Le positionnement du seuil influe directement sur la quantité de trafic autorisée à destination du service.
La figure 6 illustre une architecture de réseau qui met en oeuvre un procédé de limitation de débit conforme au procédé selon l'invention.
Des utilisateurs 60 accèdent à un service réseau 61 via un réseau 62, par exemple le réseau Internet. Les utilisateurs 60 émettent des trafics 66a, 66b à destination du service 61, via le réseau 62. Les trafics traversent des équipements réseau, par exemple des routeurs de bordure 63 et des routeurs coeur de réseau 64 et, dans un fonctionnement normal du service 61 (non représenté), les trafics sont acheminés par les routeurs 64, puis 63 jusqu'au service 61.
De manière connue, un procédé classique de limitation de débit est couplé à une méthode de détection, qui, sur détection d'un volume de trafic de paquets anormalement élevé, par exemple un trafic d'attaque, réachemine le volume de trafic anormalement élevé vers un équipement, par exemple un serveur dédié dans le réseau, qui met en oeuvre le procédé classique de limitation de débit.

Dans la présente architecture, on considère qu'une méthode de détection de trafic important, comme un trafic d'attaque, est mise en oeuvre au niveau d'un capteur 68, proche du service réseau 61. Sur détection d'un trafic anormalement élevé, un ordre de reroutage du trafic à destination du service 61 est transmis aux routeurs de bordure 63 afin que tout trafic à destination du service 61 soit routé vers un équipement du réseau 65 qui met en oeuvre le procédé de limitation de débit selon l'invention. L'équipement comprend un programme destiné à être stocké dans une mémoire interne non représentée ; le programme est téléchargeable via un réseau de télécommunications, ou stocké sur un support exécutable par un ordinateur. Il comporte des instructions pour mettre en oeuvre le procédé de limitation de débit selon l'invention. L'équipement du réseau 65 qui reçoit les trafics 66a et 66b des utilisateurs 60, bloque ou retransmet au service des paquets des trafics selon le procédé de l'invention. Le trafic 68a, 68b qui est effectivement réinjecté dans le réseau par l'équipement réseau 65 et qui est transmis au service 61 est sain.

Dans une variante de l'architecture de réseau, le procédé de limitation de débit selon l'invention peut être distribué sur plusieurs équipements réseau 65.

Dans une réalisation particulière de l'invention, l'équipement réseau 65 qui met en oeuvre le procédé selon l'invention est un serveur dédié à la fonction de limitation de débit. Dans une réalisation alternative de l'invention, non représentée, l'équipement réseau 65 est un routeur coeur de réseau, en charge du routage de trafic, qui intègre en outre une fonction de limitation de débit.

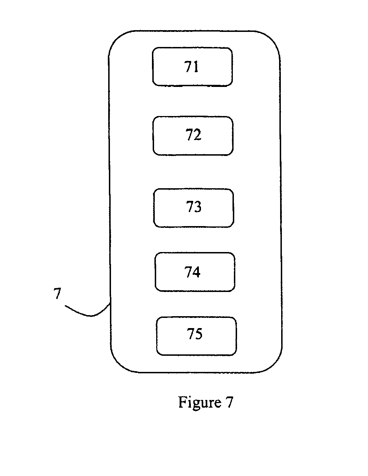

La figure 7 est un exemple de représentation fonctionnelle d'un dispositif de limitation de débit selon l'invention.

Un dispositif 7 de limitation de débit selon l'invention est agencé pour limiter un trafic de paquets de données à destination d'un service réseau non représenté. Le service réseau a un débit cible $D^M$. Il est accordé une marge de tolérance $T$, marge acceptable entre le débit de données réellement transmises au service et le débit cible $D^M$. Le trafic émane d'au moins un contributeur.

Le dispositif 7 comprend les modules fonctionnels suivants :

Un module 71 de transmission, agencé pour transmettre un paquet issu d'un contributeur vers le service réseau si le débit du trafic du contributeur est en dessous d'un seuil, le seuil étant fonction du débit cible du service et d'un trafic de données courant à destination du service. Le débit du trafic du contributeur est mesuré sur le trafic de paquets de données courant.

Un module 72 de calcul de débit, agencé pour calculer le débit associé à la portion du trafic provenant d'un contributeur.

Un module 73 de calcul du seuil, agencé pour calculer le seuil qui discrimine les gros des petits contributeurs, le seuil étant fonction du trafic de paquets de données courant à destination du service, et du débit cible $D^M$.

Un module 74 d'évaluation d'un instant de recalcul du seuil. Le seuil ayant été calculé à un premier instant, le module 74 d'évaluation est agencé pour fournir un second instant où le seuil sera recalculé.

Un module 75 de limitation du seuil actif en cas d'oscillations du seuil, destiné à borner le seuil par deux derniers seuils successifs, l'un des deux derniers seuils successifs étant au-dessus du seuil, et l'autre au-dessous.

Les modules communiquent entre eux par un bus de communication non représenté. Le dispositif 7 de limitation de débit comprend également des interfaces externes non représentées, pour, par exemple recevoir le flux à destination du service et retransmettre les paquets autorisés vers le service.

Dans une réalisation particulière de l'invention, le dispositif 7 de limitation de débit comprend uniquement le module 71 de transmission, les autres modules étant installés dans des entités du réseau non représentées qui communiquent avec le module 71 du dispositif 7.

## Revendications

**1.** Procédé de limitation de débit vers un service réseau, le service ayant un débit cible ($D^M$), un trafic (21) de paquets de données à destination du service provenant d'au moins un contributeur, un débit étant associé à la portion du trafic provenant dudit contributeur, ledit procédé étant **caractérisé en ce qu'**il comprend une étape (5) de transmission vers le service du paquet issu du contributeur si le débit du trafic du contributeur est en-dessous d'un seuil ($L_n$), le seuil étant fonction du débit cible et d'un trafic de paquets de données courant à destination dudit service, le débit du trafic du contributeur étant mesuré sur le trafic de paquets de données courant.

**2.** Procédé selon la revendication 1, dans lequel le seuil ($L_n$) étant calculé à un premier instant, il est évalué, à chaque réception de paquet, un second instant où le seuil sera recalculé.

**3.** Procédé selon la revendication 2, dans lequel une période de temps variable ($T_R$) de calcul du seuil étant définie par le premier et le second instants de calcul du seuil, ladite période de temps variable est comprise entre une valeur minimale ($T^0$) de détermination du trafic de paquets de données courant, et une valeur maximale prédéterminée ($T_R^{\max}$).

**4.** Procédé selon l'une des revendications précédentes, dans lequel lorsque l'un des deux derniers seuils successifs est au-dessus du seuil, et l'autre au-dessous, le seuil est en outre borné par les deux derniers seuils successifs.

**5.** Dispositif (7) de limitation de débit vers un service réseau, le service ayant un débit cible $(D^M)$, un trafic de paquets de données à destination du service provenant d'au moins un contributeur, un débit étant associé à la portion du trafic provenant dudit contributeur, ledit dispositif étant **caractérisé en ce qu'**il comprend des moyens (71) de transmission vers le service du paquet issu du contributeur si le débit du trafic du contributeur est en-dessous d'un seuil, le seuil étant fonction du débit cible et d'un trafic de paquets de données courant à destination dudit service, le débit du trafic du contributeur étant mesuré sur le trafic de paquets de données courant.

**6.** Dispositif de limitation de débit selon la revendication 5, comprenant en outre :

   - des moyens (72) de calcul du débit associé à la portion du trafic provenant dudit contributeur, et
   - des moyens (73) de calcul du seuil.

**7.** Dispositif selon la revendication 6, comprenant en outre des moyens (74) d'évaluation d'un instant de recalcul du seuil, le seuil ayant été calculé à un premier instant, les moyens d'évaluation sont destinés à fournir un second instant où le seuil sera recalculé.

**8.** Dispositif selon la revendication 6 ou la revendication 7, comprenant en outre des moyens (75) de limitation du seuil, destinés à borner le seuil par deux derniers seuils successifs, l'un des deux derniers seuils successifs étant au-dessus du seuil, et l'autre au-dessous.

**9.** Equipement réseau (65), **caractérisé en ce qu'**il comprend un dispositif de limitation de débit vers un service réseau, le service ayant un débit cible $(D^M)$, un trafic de paquets de données à destination du service provenant d'au moins un contributeur, un débit étant associé à la portion du trafic provenant dudit contributeur, ledit dispositif comprenant des moyens de transmission vers le service du paquet issu du contributeur si le débit du trafic du contributeur est en-dessous d'un seuil, le seuil étant fonction du débit cible et d'un trafic de paquets de données courant à destination dudit service, le débit du trafic du contributeur étant mesuré sur le trafic de paquets de données courant.

**10.** Programme d'ordinateur sur un support de données et chargeable dans la mémoire interne d'un ordinateur, le programme comprenant des portions de code pour l'exécution des étapes d'un procédé selon l'une quelconque des revendications 1 à 4, lorsque le programme est exécuté sur ledit ordinateur.

**11.** Moyen de stockage de données partiellement ou totalement amovible, comportant des instructions de code de programme informatique pour l'exécution des étapes d'un procédé selon l'une quelconque des revendications 1 à 4.

Figure 1

$$t_n - t_{n-k} \leq T^0$$

Figure 2a

$$t_{n+1} - t_{n-k+2} \leq T^0$$

Figure 2b

Figure 3a

Figure 3b

Figure 4

Période de
calcul de la
limite

$T_R^{max}$

si $D^1 \neq 0$

$T_R^{min}$

$(1-\tau)D^M$     $D^M$     $(1+\tau)D^M$     $D^0$

Figure 5

Figure 6

Figure 7

Office européen
des brevets

Numéro de la demande

EP 07 01 6099

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 596 576 A (MILITO RODOLFO A [US]) 21 janvier 1997 (1997-01-21) * colonne 3, ligne 11 - ligne 48 * * colonne 5, ligne 45 - ligne 50 * * colonne 6, ligne 1 - ligne 21 * * colonne 7, ligne 13 - ligne 27 * ----- | 1-11 | INV. H04L12/56 |
| A | US 5 274 644 A (BERGER ARTHUR W [US] ET AL) 28 décembre 1993 (1993-12-28) * le document en entier * ----- | 1-11 | |
| A | US 2004/120252 A1 (BOWEN HOYT EDWIN [US] ET AL) 24 juin 2004 (2004-06-24) * le document en entier * ----- | 1-11 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| La Haye | 11 octobre 2007 | Lamadie, Sylvain |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................................................
& : membre de la même famille, document correspondant

EPO FORM 1503 03.82 (P04C02)

**EP 1 890 437 A1**

**ANNEXE AU RAPPORT DE RECHERCHE EUROPEENNE
RELATIF A LA DEMANDE DE BREVET EUROPEEN NO.**

EP 07 01 6099

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-10-2007

| Document brevet cité au rapport de recherche | | Date de publication | Membre(s) de la famille de brevet(s) | | Date de publication |
|---|---|---|---|---|---|
| US  5596576 | A | 21-01-1997 | EP<br>JP | 0772324  A2<br>10049390  A | 07-05-1997<br>20-02-1998 |
| US  5274644 | A | 28-12-1993 | AUCUN | | |
| US  2004120252 | A1 | 24-06-2004 | AT<br>AU<br>BR<br>CA<br>CN<br>EP<br>WO<br>JP<br>KR<br>MX<br>TW | 358938  T<br>2003274502  A1<br>0317582  A<br>2509409  A1<br>1726680  A<br>1573977  A1<br>2004057807  A1<br>2006511137  T<br>20050084050  A<br>PA05006550  A<br>245506  B | 15-04-2007<br>14-07-2004<br>22-11-2005<br>08-07-2004<br>25-01-2006<br>14-09-2005<br>08-07-2004<br>30-03-2006<br>26-08-2005<br>19-10-2005<br>11-12-2005 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 20060036720 A